# EUROPÄISCHE PATENTSCHRIFT

(11) **EP 2 228 260 B1**
(45) Veröffentlichungstag und Bekanntmachung des Hinweises auf die Patenterteilung: **23.02.2011**
(21) Anmeldenummer: 09154893.3
(22) Anmeldetag: 11.03.2009
(51) Int. Cl.: B60R 1/06, B60J 1/10, B60J 1/20

(54) **Einfacher, leichter Rückblickspiegel**
Simple, light rear-view mirror
Rétroviseur simple, léger

(43) Veröffentlichungstag der Anmeldung: 15.09.2010
(73) Patentinhaber: SMR Patents S.à.r.l., 1653 Luxembourg (LU)
(72) Erfinder: Liesener, Alf, 73614, Schorndorf (DE)
(74) Vertreter: Rausch, Gabriele

(56) Entgegenhaltungen:
- DE-A1- 3 339 141
- DE-A1- 3 705 574
- DE-A1- 19 720 812
- US-A1- 2003 223 136

## Beschreibung

Die vorliegende Erfindung schlägt einen besonders einfachen und leichten Außenspiegel für ein Fahrzeug vor, der als Kunststoffspritzteil einstückig hergestellt wird. Der erfindungsgemäße Spiegel wird direkt ohne Spiegelfuß am Fahrzeug befestigt und umfasst eine Fensterführung.

Die Diskussion um den CO2 Eintrag in die Atmosphäre und um dem Beitrag den Automobile mit Verbrennungsmotoren hierzu leisten, führt zunehmend zu Überlegungen, wie man CO2 Emissionen durch Gewichtsreduktion der Fahrzeuge einsparen kann.

Einen kleinen Beitrag kann hierzu auch der Außenspiegel leisten. Zusätzlich zu den Luftwiderstandsverlusten durch den Außenspiegel weist ein normaler Außenspiegel auch ein erhebliches Gewicht auf. Das Gewicht eines Außenspiegels wird dabei von der Glasplatte geprägt, deren Gewicht über massive, zum Teil metallische Halterungen abgefangen werden muss. Durch die Forderungen, dass die Außenspiegel auch bei hohen Geschwindigkeiten nicht vibrieren dürfen ist eine solche steife Anbindung an das Fahrzeug nötig.

Ein elektrischer Verstellmotor für das Spiegelglas erhöht das Gewicht noch zusätzlich. Der Aufbau eines Außenspiegels im Stand der Technik ist ein Spiegelfuß und mit diesem Spiegelfuß verbunden ein Spiegelgehäuse. Im Spiegelfuß befindet sich in vielen Fällen eine metallische Montageplatte, mit der der Spiegel am Fahrzeug befestigt ist.

Die Platte wird dabei mit der Fahrzeugtür oder im Fensterdreieck verschraubt.

Es ist ein Außenrückblickspiegel bekannt EP 1964720, bei dem das Spiegelgehäuse einstückig ausgebildet ist. Das einstückige Spiegelgehäuse wird in diesem Stand der Technik im Spiegeldreieck montiert wobei das Spiegelgehäuse sich entlang des Fahrzeugs erstreckt und sich im Design harmonisch aus der Karosserie heraus ergibt. DE 3339141 zeigt einen gattungsbildeneden Außenspiegel, der in eine Seitenscheibe integriert ist. Dieser weist eine Fensterführung auf. Das Spiegelgehäuse selbst weist keine weiteren Vorrichtungen zur Aufnahme eines Spiegelglases auf.

DE 3705574 zeigt einen einstückigen Spiegelkörper, der als Ausstülpung der Fahrertür gebildet ist. Es weist eine getrennte Befestigungsplatte mit einer Kugel für die Aufnahme des Spiegels auf. Diese Ausführung ist nicht in einem Stück gebildet, und wird nicht mit einer Fensterführung befestigt.

Ziel der vorliegenden Erfindung ist es einen Außenspiegel herzustellen, der durch Gewichtsreduktion eine metallische Montageplatte vermeidet und in einem Stück gespritzt werden kann. Die einfache Herstellung des gesamten Spiegels mit Befestigungssystem und Fensterführung in einem Kunststoffspritzvorgang reduziert die Kosten der Herstellung. Die Bautiefe des erfindungsgemäßen Spiegels ist dabei auf ein Minimum reduziert.

Um das Gewicht gering zu halten dienen mehrer Maßnahmen. Zum einem wird der Spiegel nach den Zulassungsrichtlinien nach ECE als nicht abklappbarer Spiegel gestaltet und muss somit unter einem Maß von 10 cm gemessen von der Außenkontur des Fahrzeugs sein.

Der erfindungsgemäße Spiegel weist zudem eine Spiegelscheibe aus Plastikglas auf, was das Gewicht nochmals deutlich verringert.

### Beschreibung der Erfindung

Im nachfolgenden wird die Erfindung in Zeichnungen dargestellt und anhand von Beispielen erläutert.
Figur 1 zeigt eine erste Ausführungsform des erfindungsgemäßen Spiegels.
Figur 2 und 3 weitere Ausführungsformen des erfindungsgemäßen Spiegels.
Figur 4 zeigt ein Detail der Halterung der Spiegelscheibe.
Figur 5 ist ein Schnittbild durch Figur 4.
Figur 6 zeigt eine weitere Ausführungsform der Befestigung des Spiegels.
Figur 7 zeigt eine nicht erfindungsgemässe Ausführungsform der Befestigung des Spiegels.
Figur 8 zeigt einen Türrahmen eines Fahrzeugs.

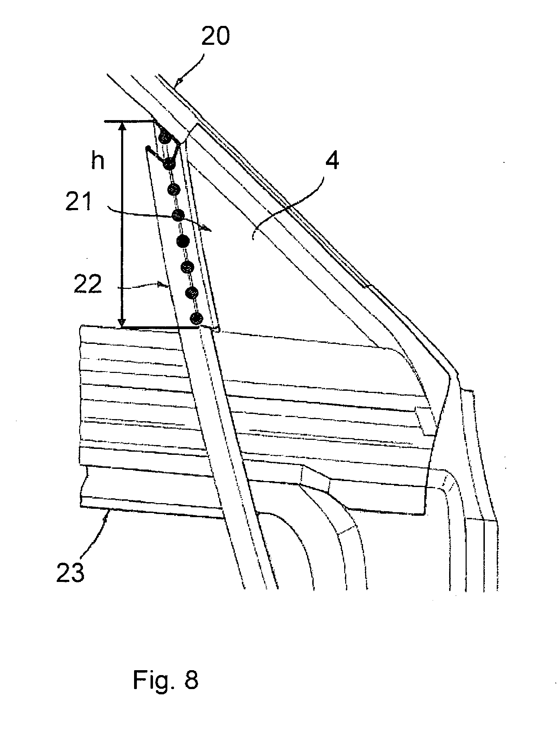

In Figur 8 ist ein Ausschnitt einer Fahrzeugtür dargestellt. Ein Türrahmen 20, umfasst dabei die vordere Kante der Fahrzeugtür. Die Fahrzeugtür, die in Figur 8 von innen dargestellt ist, besitzt eine Fensterverstärkung 22, die sich in einem Winkel zum Türrahmen in der Innenseite der Fahrzeugtür erstreckt. Zusammen mit einem Türkasten 23 wird dadurch ein Ausschnitt definiert, der das Spiegeldreieck 4 bildet. Das Spiegeldreieck 4 wird im Stand der Technik alternativ mit einer Fensterscheibe versehen, mit blech ausgekleidet oder wird von Kunststoffplatte ausgefüllt. Die Höhe h sowie die groß gepunktete Linie entlang der Fensterverstärkung 22 definiert die Position an der der erfindungsgemäße Spiegel befestigt wird. Die Fensterverstärkung 22 enthält eine Fensterführung, in der die Seitenscheibe des Fahrzeugs geführt ist. Die Scheibe wird beim Öffnungsvorgang in die Fahrzeugtür versenkt. Die Führung der Scheibe muss dabei nicht auf der gesamten Versenktiefe erfolgen.

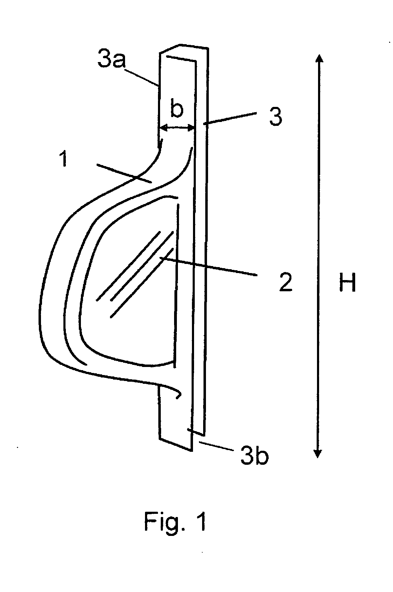

Figur 1 zeigt in einer ersten Ausführungsform den erfindungsgemäßen Spiegel. Ein Spiegelgehäuse 1 umfasst in einer Öffnung ein Spiegelglas 2. Direkt an das Spiegelgehäuse 1 angespritzt befindet sich eine Fensterführung 3. Die Fensterführung 3 ist so ausgestaltet, dass sie an der Fensterverstärkung 22 am Spiegeldreieck 4 einfach zu befestigen ist. Dabei werden die, durch die Fensterführung ausgebildeten Führungselemente in einfacher Art und Weise an der Fensterverstärkung positioniert und dort in bekannter Art und Weise, beispielsweise durch Verschrauben, Verkleben oder Verclipsen, befestigt.

Die Fensterführung selbst besteht wie im Stand der Technik aus einer u-förmigen Führung, deren Schenkel die bewegliche Fensterscheibe der vorderen Fahrzeugtür umfassen.

Wie im Stand der Technik werden die Schenkel der Fensterführung mit Dichtmaterial beschichtet oder mit diesem Material beklebt.

Das Spiegelgehäuse 1 weist eine besonders geringe Bautiefe d auf, da keine elektrischen Verstellantriebe vorgesehen sind, die Bauraum beanspruchen würden. Im Allgemeinen ist die Tiefe des Spiegelgehäuses der Breite b der Fensterführung 3 angepasst. In Figur 1 ist das Spiegelgehäuse 1 bezüglich der Fensterführung 3 mittig ausgelegt. Die Stege der Fensterführung haben sowohl an der Oberseite des Spiegelgehäuses 1 als an der Unterseite es Spiegelgehäuses eine Verlängerung 3a und 3b. Die Gesamtlänge der Befestigung H entspricht der Höhe h des Fensterdreiecks der Fahrzeugtür.

In einer anderen Ausführungsform, die nicht in einer Figur gezeigt ist, besitzt die Befestigung mit der Fensterführung 3 keinen Verlängerungen 3a und 3b. Die Befestigung mit der Fensterführung erstreckt sich in dieser Ausführungsform auf die Länge H, die dem Spiegelkopf entspricht.

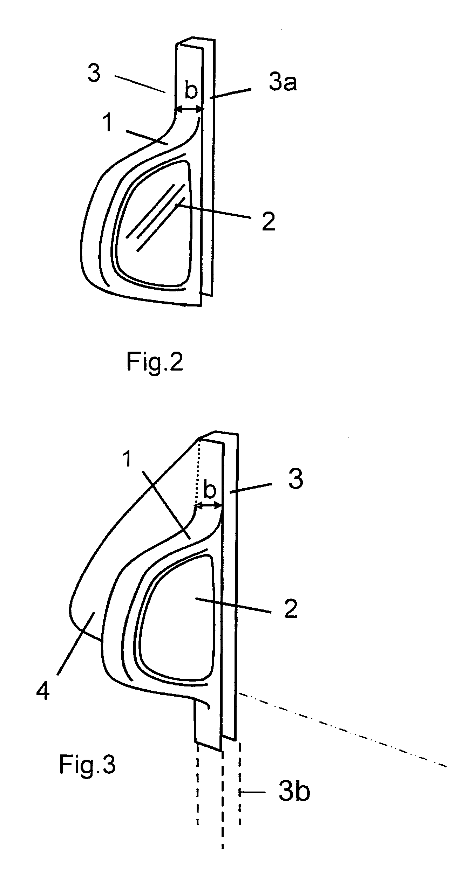

In Figur 2 wird eine weitere Ausführungsform des erfindungsgemäßen Spiegels beschrieben. Figur 2 unterscheidet sich von Figur 1 durch die Position des Spiegelgehäuses 1 in Bezug auf die Fensterführung 3. In der Ausführungsform nach Figur 2 ist das Spiegelgehäuse 1 an der unteren Seite der Fensterführung 3 angeordnet und schließt mit ihr bündig ab. Die Fensterführung 3 besitzt lediglich an der Oberseite des Spiegelgehäuses 1 eine Verlängerung 3 a.

Figur 3 ist eine weitere Ausführungsform des erfindungsgemäßen Spiegels. In dieser Ausführungsform wird das Spiegeldreieck 4 an das Spiegelgehäuse sowie die Fensterführung 3 angespritzt. Die Verlängerung 3b an der Unterseite des Spiegels ist in einer weiteren Ausführungsform so in die Fahrzeugtür - als gestrichelte Linie gezeigt -verlängert, dass die Fensterführung auch innerhalb der Fahrzeugtür erfolgen kann.

Die Ausführungsformen nach Figur 1 bis 3 werden einteilig aus einer Spritzgussform hergestellt. Das Spiegelgehäuse sowie die Fensterführung und im Fall von Figur 3 das Spiegeldreieck 4 werden in einem Arbeitsvorgang aus einem Werkzeug gespritzt. In diesem einfachen Spiegeldesign muss nach der Herstellung der Grundform aus Kunststoff nur noch die Spiegelscheibeinstalliert werden. Die Spiegelscheibe 2 ist mit einem gespritzten Plastikglas vorgesehen. Diese weist gegenüber der konventionellen schweren Glasspiegelplatte Vorteile auf. Da der Spiegel in diesem Spiegeldesign lediglich manuell verstellbar ist, muss eine Spiegelhalterung vorgesehen sein mit der das möglich ist. Hier wird auf die bekannte Kugelgelenklösung zurückgegriffen.

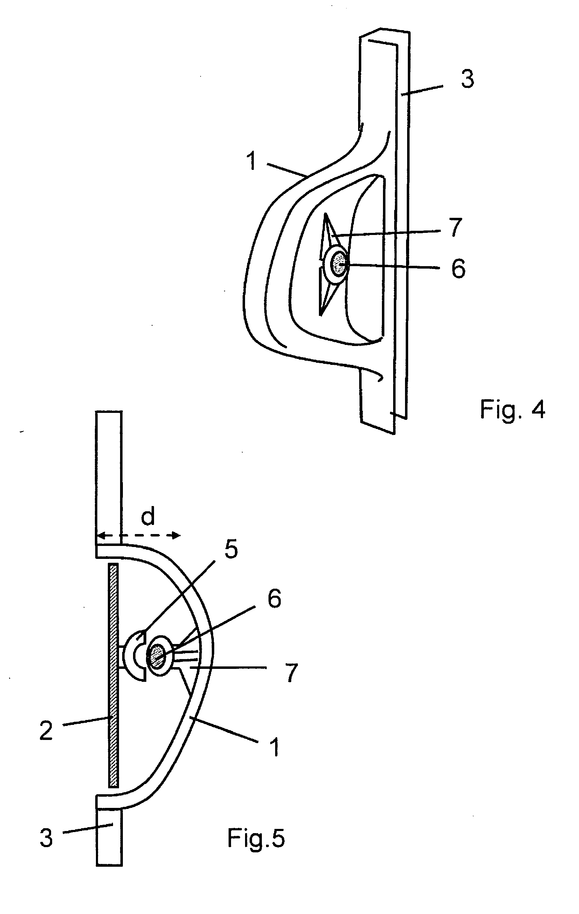

In Figur 4 ist dargestellt, wie die Lösung aussieht. Im Spiegelgehäuse 1 ist auf der Rückseite der Öffnung eine Kugel 6, verstärkt durch Stege 7, angespritzt. Die Auslegung der Kugel 6 sowie der verstärkenden Stege 7 hängt dabei vom Gewicht des Spiegels ab.

Hier zeigt sich der Vorteil des Plastikglas, das es erlaubt eine weniger aufwendige Kugel zu spritzen, da das Kugelgelenk nur für ein geringes Gewicht ausgelegt werden muss.

Figur 5 zeigt in einem Schnittbild durch Figur 4 die Befestigungsvorrichtung. In der Tiefe d des Spiegelgehäuses 1 ist die Kugel 6 mit den Stegen 7 zu sehen. Die Spiegelplatte 2 weist eine Kugelaufnahme 5 auf, die die Kugel 6 umfasst. Die beiden Bauteile, Kugelaufnahme und Kugel, werden ineinander gepresst und der Spiegel auf diese Art und Weise verstellbar im Spiegelgehäuse angeordnet. Handelt es sich bei der Spiegelplatte 2 um ein Plastikglas ist die Kugelaufnahme 5 direkt an den Spiegel anspritzbar. Damit wäre Spiegel sowie Kugelaufnahme ebenfalls nur ein Spritzgussteil.

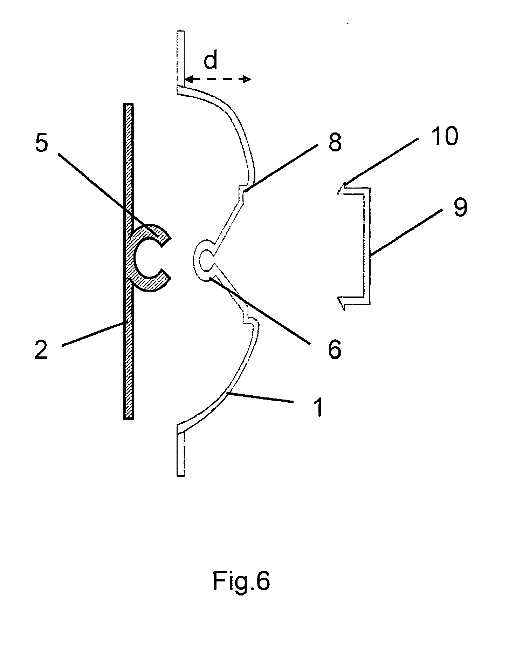

Figur 6 zeigt eine alternative Ausführungsform des Spiegelgehäuses mit Befestigung. Das Spiegelgehäuse mit der Tiefe d weist die Form einer Drei, mit einer Eindellung in der Außenkontur des Spiegelgehäuses 1 auf. Die Eindellung ist vorgesehen um auf der Innenseite des Spiegelgehäuses eine Kugelstruktur 6 zu erzeugen. Diese Form ermöglicht ein einfaches Ausformen aus einer Kunststoffspritzgussform. Die Außenkontur des Spiegelgehäuses 1 wird mit einer Abdeckplatte 9 geschlossen. Diese Abdeckplatte 9 weist Klipse 10 auf, die in Klipsaufnahmen 8 des Spiegelgehäuses 1 eingreifen. Die Abdeckplatte 9 kann dabei verschiedene Ausführungsformen aufweisen. Sie kann der Farbe und der Kontur des Spiegelgehäuses 1 angepasst sein oder ein Logo oder eine andere Farbgestaltung aufweisen. Die Eindellung des Spiegelgehäuses ist in Figur 6 zentrisch dargestellt. Die Ausbildung, die zur Herstellung des Kugelgelenkes dient muss so gestaltet sein, dass der Spiegel im Spiegelgehäuse beweglich gelagert ist. Dabei kann auch eine Abweichung aus einer mittigen Lage vorkommen.

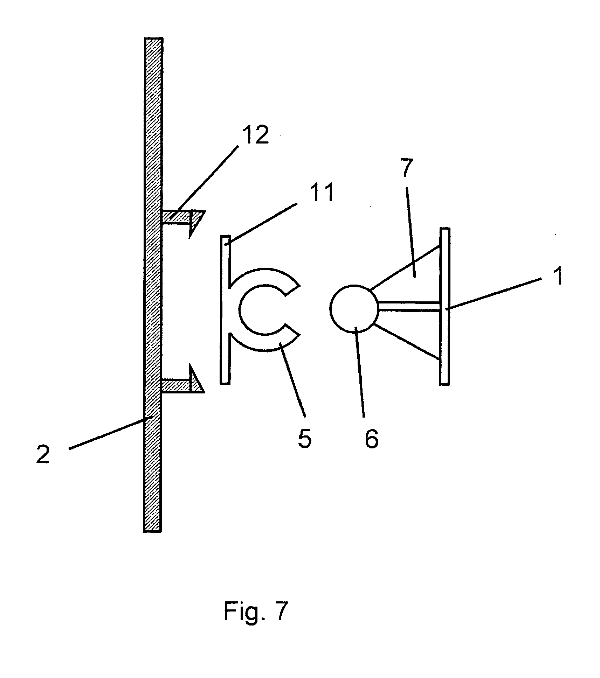

Figur 7 zeigt eine nicht erfindungsgemässe Auführungsform einer Spiegelplatte, die alternativ zu einer angespritzten Lösung ist. In der Ausführungsform nach Figur 7 ist die Spiegelplatte mit angespritzten Klipsen 12 versehen. Das Anspritzen von kleinen Klipsen ist einfacher als das Anspritzen einer kompletten Kugelaufnahme. Zur Montage der Plastikglasspiegelplatte 2 wird ein Zwischenstück 11 benötigt, das wiederum eine Kugelaufnahme 5 aufweist. Auf der Gehäuseseite 1 ist wiederum ein Kugel 6 befestigt mit Stegen 7 vorgesehen. Die Kugel mit Stegen wird mit der Gehäuserückwand verbunden.

### Legende

- 1: Spiegelgehäuse
- 2: Spiegelscheibe
- 3: Fensterführung
- 4: Spiegeldreieck
- 5: Kugelaufnahme
- 6: Kugel
- 7: Steg
- 8: Klipsaufnahme
- 9: Abdeckung
- 10: Klips
- 11: Zwischenstück
- 12: Angespritzte Klipse
- 20: Türrahmen
- 21: Glas
- 22: Fensterverstärkung
- 23: Türkasten

## Patentansprüche

1. Rückblickspiegel bestehend aus einem Spiegelgehäuse (1), das einen Öffnung zur Aufnahme eines reflektierenden Elements (2) aufweist, wobei das reflektierende Element (2) über eine Verbindung (5,6) verdrehbar im Spiegelgehäuse (1) gelagert ist, wobei das Spiegelgehäuse (1) einstückig ohne Spiegelfuß in ein Befestigungsteil (3) mit einer Fensterführung mit einer Länge (H) übergeht, das der Einbaulänge (h) am Spiegeldreieck eines Fahrzeugs entspricht., **dadurch gekennzeichnet, dass** die Verbindung (5, 6) ein Kugelgelenk ist. und das Spiegelgehäuse (1) auf der Rückseite seiner Öffnung für den Spiegel eine angespritzte Kugel (6) mit Versteifungselementen (7) aufweist, wobei
das reflektierende Element (2) ein Plastikglas-Spiegel ist.

2. Rückblickspiegel nach Anspruch 1 **dadurch gekennzeichnet, dass** der Plastikglas Spiegel (2) auf seiner innen liegenden Fläche angespritzte Aufnahmen (5) für die Kugel (6) besitzt.

3. Rückblickspiegel nach Anspruch 1 **dadurch gekennzeichnet, dass** das Befestigungsteil (3) um eine Kunststoffscheibe, die die Form eines Dreiecks hat, erweitert ist und diese Kunststoffscheibe in einen Ausschnitt einer Fahrzeugtür einsetzbar ist.

4. Rückblickspiegel nach Anspruch 1 **dadurch gekennzeichnet, dass** das Spiegelgehäuse eine Tiefe (d) aufweist, die der Breite (b) des Befestigungsteil (3) angepasst ist das als Befestigungsteil mit einer Fensterführung in Form einer u-förmigen Führung ausgelegt ist.

## Claims

1. Rear view mirror consisting of a mirror housing (1), which has an opening for accepting a reflective element (2), whereby the reflecting element (2) is rotatably held by a connection (5, 6) in the mirror housing (1), whereby the mirror housing (1) merges integrally without a mirror foot into a fixing part (3) with a window guide with a length (H), which corresponds to the installation length (h) of the reflective triangle of a vehicle, **characterised in that** the connection (5, 6) is a ball joint, and the mirror housing (1) comprises on the back of its opening for the mirror a moulded ball (6) with stiffening elements (7), with the reflective element (2) being a plastic glass mirror.

2. Rear view mirror according to claim 1, **characterised in that** the plastic glass mirror (2) has moulded sockets (5) for the ball (6) on its internal surfaces.

3. Rear view mirror according to claim 1, **characterised in that** the fixing part (3) is extended by a plastic sheet, which has the form of a triangle, and this plastic sheet can be used in a part of a vehicle door.

4. Rear view mirror according to claim 1, **characterised in that** the mirror housing comprises a recess (d) which is adapted to the width (b) of the fixing part (3), which is designed as a fixing part with a window guide in the form of a U-shaped guide.

## Revendications

1. Rétroviseur composé d'un logement de miroir (1) qui présente une ouverture pour recevoir un élément réfléchissant (2), dans lequel l'élément réfléchissant (2) est logé à rotation dans le logement de miroir (1) par le biais d'une connexion (5, 6), dans lequel le logement de miroir (1) se transforme d'une pièce sans pied de miroir en une pièce de fixation (3) avec une coulisse latérale de fenêtre avec une longueur (H) qui correspond à la longueur totale (h) sur le triangle de miroir d'un véhicule, **caractérisé en ce que** la connexion (5, 6) est une articulation sphérique et le logement de miroir (1) présente sur le côté arrière ce son ouverture pour le miroir une sphère injectée (6) avec des éléments de renforcement (7), dans lequel l'élément réfléchissant (2) est un miroir en verre plastique.

2. Rétroviseur selon la revendication 1, **caractérisé en ce que** le miroir en verre plastique (2) possède sur sa surface interne des logements injectés (5) pour la sphère (6).

3. Rétroviseur selon la revendication 1, **caractérisé en ce que** la pièce de fixation (3) est élargie d'un disque en plastique qui possède la forme d'un triangle et ce disque en plastique peut être inséré dans une découpe d'une portière de véhicule.

4. Rétroviseur selon la revendication 1, **caractérisé en ce que** le logement de miroir présente une profondeur (d) qui est adaptée à la largeur (b) de la pièce de fixation (3) qui est conçue en tant que pièce de fixation avec une coulisse latérale de fenêtre sous la forme d'une coulisse en forme de u.
